# FASCICULE DE BREVET EUROPEEN

(11) **EP 2 024 239 B1**
(45) Date de publication et mention de la délivrance du brevet: **10.07.2013**
(21) Numéro de dépôt: 07735921.4
(22) Date de dépôt: 15.05.2007
(51) Int. Cl.: B65D 3/04

(54) **EMBALLAGE FLEXIBLE EN MATIÈRE PLASTIQUE**
AUS KUNSTSTOFF HERGESTELLTE FLEXIBLE VERPACKUNG
FLEXIBLE PACKAGING MADE FROM PLASTIC

(30) Priorité: 01.06.2006 EP 06114847
(43) Date de publication de la demande: 18.02.2009
(73) Titulaire: Aisapack Holding SA, 1896 Vouvry (CH)
(72) Inventeur: THOMASSET, Jacques, 1896 Vouvry (CH); KELLER, Gerhard, 1896 Vouvry (CH); ROY, Hugues-Vincent, 1896 Vouvry (CH); PELLISSIER, Joachim, 1896 Vouvry (CH)
(74) Mandataire: Grosfillier, Philippe
(86) Numéro de dépôt international: PCT/IB2007/051852
(87) Numéro de publication internationale: WO 2007/138515

(56) Documents cités:
- EP-A- 0 229 984
- WO-A-2004/054786
- WO-A-2006/082473
- SE-C2- 502 829
- US-A1- 2005 035 084
- US-A1- 2006 081 688

## Description

### Domaine de l'invention

La présente invention se situe dans le domaine des emballages en matière plastique constitués principalement de trois éléments préfabriqués, à savoir d'une paroi latérale formant un corps tubulaire comprise entre un fond semi-rigide et un goulot rigide. Ces emballages permettent d'allier les propriétés fonctionnelles des emballages de types bouteilles et de types poches souples.

La présente invention est particulièrement destinée, mais pas de façon exclusive, aux utilisations suivantes :
- Conditionnement de boissons alimentaires telles que jus de fruits, boissons vitaminées, lait, thé froid, etc.
- Conditionnement de produits visqueux tels que dentifrice, crèmes de soins corporels, onctions pharmaceutiques, produits alimentaires (mayonnaise, ketchup, moutarde), etc.
- Conditionnement de produits techniques tels que silicone ou mastic.

### Etat de la technique

Il existe divers types d'emballages correspondants à la définition du chapitre précédent. Des procédés de fabrication d'emballages de ce type sont connus de WO 2004/054786 et de SE 502 829 C2.

A titre d'exemple, on peut citer aussi l'emballage divulgué dans le document brevet autrichien AT 293 944 où une tête semi-rigide est soudée à une feuille flexible mise en forme de tube cylindrique de manière à fabriquer une poche souple droite. La demande de brevet EP 1 362 797 présente également un emballage relativement similaire où le corps du container peut comporter à ses deux extrémités des pièces semi-rigides rapportées.

Les emballages de l'état de la technique offrent certes de nombreux avantages, mais il s'avère que leur réalisation dans la pratique n'est pas aisée. En effet, la réalisation d'emballages flexibles qui se comportent de manière adéquate à l'utilisation révèle plusieurs difficultés qui sont principalement liées à des problèmes de manque de rigidité et de non-consistance (grande variation des propriétés mécaniques et géométriques). Par exemple, lors de la production de l'emballage les points suivants sont critiques : Optimisation des épaisseurs des parois, palettisation à vide, transport sur les chaînes de production, remplissage, bouchonnage, palettisation après remplissage, etc...

Lors de l'utilisation de l'emballage, d'autres points critiques sont à prendre en considération, en particulier : Stabilité de l'emballage lorsqu'il est posé sur son fond (souvent les emballages flexibles ne sont pas parfaitement droits), ouverture sans risque de perte accidentelle du produit, possibilité de refermer l'emballage, etc...

La plupart de ces points critiques sont dus à la difficulté de produire des emballages flexibles ayant suffisamment de rigidité mécanique

### Exposé général de l'invention

La présente invention vise notamment à remédier aux problèmes précités.

A cet effet, elle concerne la fabrication d'un emballage plastique pour produits liquides ou visqueux comprenant trois éléments distincts, à savoir une paroi latérale cylindrique flexible formée à partir d'une feuille enroulée autour d'un mandrin, un fond au moins partiellement rigide et une partie supérieure au moins partiellement rigide qui comprend un goulot; ledit emballage étant adapté pour se reposer sur ledit fond et ayant une hauteur H et un diamètre D dont le rapport H/D se situe entre 1 et 5 ; la paroi latérale et/ou les deux autres éléments prenant appui sur un mandrin lors de leur assemblage.

Divers mode de réalisation particulièrement avantageux de l'invention sont décrits dans les revendications dépendantes.

Il convient de relever que l'emballage fabriqué selon l'invention offre de nombreuses améliorations par rapport à l'état de la technique (stabilité, résistance mécanique, etc...) grâce au fait que ses composants, lors de leur assemblage, prennent appui sur un mandrin.

En l'absence d'un tel support, il n'est pas possible d'obtenir un emballage aussi performant.

### Exposé détaillé de l'invention

L'invention est décrite plus en détail ci-après au moyen d'exemples illustrés par les figures suivantes :
La figure 1 représente la fixation de la partie supérieure à la paroi latérale
La figure 2 représente la fixation du fond à la paroi latérale

### Liste des références numériques utilisées sur les figures

1) Paroi latérale
2) Fond
3) Partie supérieure
4) Goulot
5) 1^{er} mandrin
6) 2^{e} mandrin
7) Collerette
8) Cylindre-support
9) Anneau-support

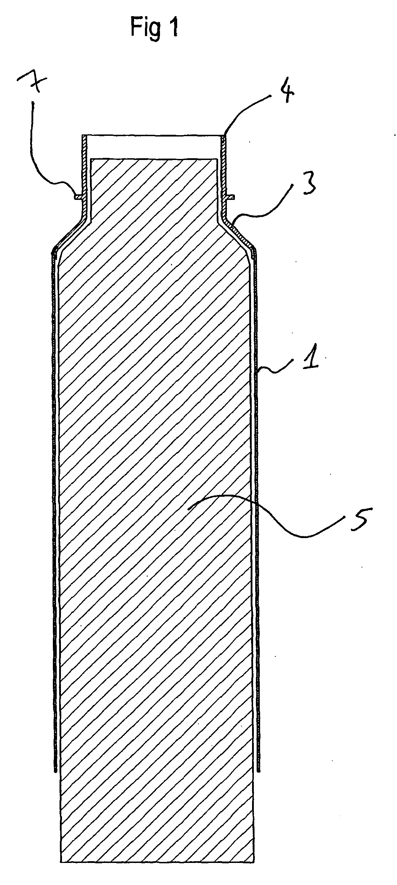

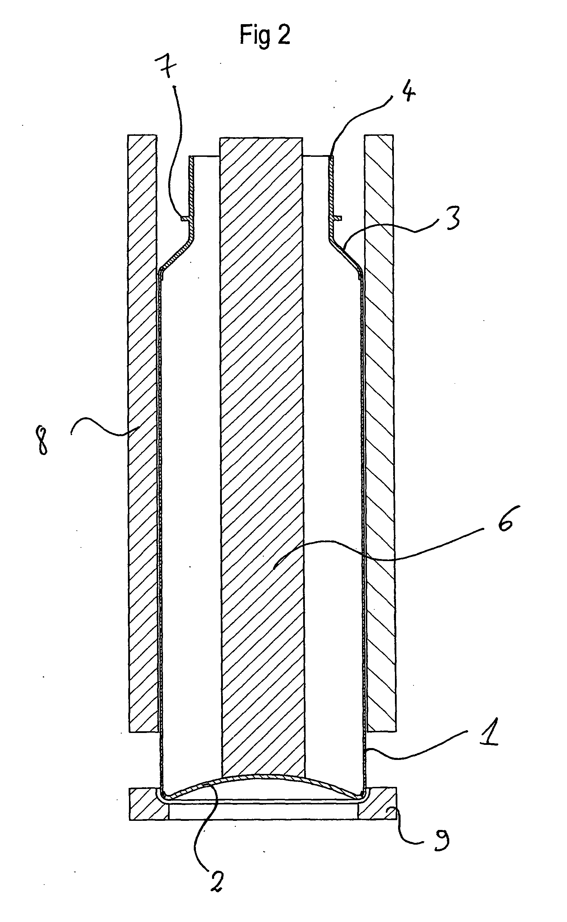

L'emballage illustré sur les figures 1 et 2 comprend une paroi latérale 1 constitué d'une feuille laminée enroulée, d'un fond 2 et d'une pièce supérieure 3 tous deux fixés à la paroi latérale 1.

La partie supérieure 3 est de préférence rigide alors que le fond 2 est formé d'un matériau plastique de préférence semi-rigide.

Au niveau de son goulot 4, l'emballage est muni d'une collerette 7 rigide qui fait office de moyen de manutention lorsque le tube est déplacé précédemment ou consécutivement à l'assemblage des éléments qui le composent.

Pour fixer la partie supérieure 3 à la paroi latérale 1 (figure 1), on dispose préalablement un mandrin 5 sur lequel les deux éléments 1,3 peuvent prendre appui.

De même (figure 2), pour fixer le fond 3 à la paroi latérale 1, on dispose préalablement un mandrin 6 sur lequel la partie centrale du fond 2 prend appui. En outre, l'emballage est maintenu en place au moyen d'un cylindre-support 8 et d'un anneau-support 9.

L'utilisation de mandrins 5,6 disposés à l'intérieur de l'emballage lors du soudage de la partie supérieure 3 et du fond 2 à la paroi latérale 1 est d'une grande importance pour au moins deux raisons :
1) Positionnement très précis des éléments 1-3 les uns par rapport aux autres et ainsi assure la fabrication d'emballages consistants, de manière reproductible, qui tiennent parfaitement droit sur leur fond ;
2) Application d'une force régulière et constante lors de l'opération de soudage, ce qui permet d'obtenir des soudures de qualité.

Les mandrins 5,6 doivent avoir un diamètre inférieur ou égal au diamètre de la paroi latérale 1. Avantageusement, les mandrins sont disposés sur une distance sensiblement équivalente à la hauteur de la paroi latérale. Leur longueur est donc de préférence au moins égale à la hauteur de la paroi latérale. De préférence également, ils doivent être de diamètre le plus grand possible pour assurer un positionnement précis et surtout une force maximale lors des opérations de soudage. En effet la zone de soudage entre la partie supérieure 3 (respectivement, le fond 2) avec la paroi latérale 1 se situant sur le pourtour extérieur de la pièce 3 (respectivement 2), il est donc préférable lors de l'opération de soudage d'appliquer la pression par l'intermédiaire du mandrin 5 (respectivement 6) le plus près possible de cette zone de soudage.

Dans le cas du soudage de la partie supérieure 3 à la paroi latérale 1, le mandrin 5 peut avoir avantageusement un diamètre égal au diamètre de la paroi latérale 1 car l'extrémité inférieure de la paroi latérale est complètement dégagée.

Par contre, lors du soudage du fond 2 le mandrin 6 a un diamètre déterminé par l'ouverture du goulot 4. Il est préférable d'utiliser un mandrin de diamètre juste inférieur à la dimension de l'ouverture du goulot 4.

Selon un autre mode de fabrication selon l'invention, on soude dans une première étape le fond 2 à la paroi latérale à l'aide d'un premier mandrin de diamètre égal au diamètre de la paroi latérale. Dans ce cas, le fond doit comporter une ouverture de manière à ce qu'ensuite il soit possible de souder la partie supérieure 3 à la paroi cylindrique à l'aide d'un deuxième mandrin qui passe au travers de l'ouverture du fond (ce deuxième mandrin ayant un diamètre inférieur à cette ouverture). En dernière étape, un opercule ou une pièce rigide est soudé sur le fond 2 de manière à fermer l'ouverture du fond.

L'emballage fabriqué selon la présente invention présente l'avantage de n'utiliser que le minimum de matière nécessaire pour lui assurer ses performances ; c'est-à-dire qu'à chaque endroit la quantité de matière utilisée (donc l'épaisseur des parois en cet endroit) est optimisée. La plus grande partie de l'emballage est constituée par la paroi latérale cylindrique1 qui est composée à partir d'une feuille flexible mince. Cette paroi 1 doit protéger le produit emballé de l'extérieur et peut servir comme support pour la décoration graphique et textuelle. Du point de vue mécanique cette paroi 1 doit être suffisamment rigide pour ne pas se déformer sous le poids du produit. Les extrémités (partie supérieure 3 et fond 2) apportent la rigidité et la tenue à l'emballage et sont, au moins partiellement, rigides à paroi plus épaisse. Le fond 2 doit permettre de poser l'emballage de manière stable et droite. Le goulot 4 permet de supporter un système de fermeture amovible tel qu'un bouchon (vissé ou clipsé) ou d'un opercule soudé. Pour une manipulation aisée du système de fermeture il est nécessaire que le goulot 4 ait une certaine rigidité. D'autre part le goulot 4 permet le remplissage de l'emballage après fabrication. Un avantage de la présente invention est d'apporter la rigidité mécanique de l'emballage pour le remplissage par l'intermédiaire d'une collerette 7 solidaire du goulot 4. La collerette 7 rend possible la manipulation de l'emballage sur la remplisseuse ainsi que le maintien du goulot 4 lors de la pose du système de fermeture. Pour un bon maintien du goulot 4, il est préférable d'avoir une collerette 7 de largeur supérieure à 2 mm et d'épaisseur supérieure à 1 mm. Typiquement ces éléments sont en matière plastique telle que des polyoléfines (PE ou PP). Ces éléments peuvent être mono- ou multicouche et sont produits entre autre par injection moulage, compression moulage ou thermoformage. Pour que leurs propriétés mécaniques soient suffisantes pour permettre d'obtenir un emballage performant, ces éléments comportent de préférence au moins localement une épaisseur supérieure ou égale à 1 mm.

De plus un emballage à paroi flexible produit selon la présente invention présente l'avantage de pouvoir recourir à des feuilles laminées préalablement imprimées comme élément de paroi. Ces feuilles sont produites usuellement par lamination de films extrudés (ou coextrudés) et/ou de films soufflés. Ces feuilles comportent des films soudants constitués normalement de polyoléfines (PE ou PP) et peuvent aussi comporter des films fonctionnels pour améliorer les propriétés mécaniques (OPP, PET, PA, PS ...) et les propriétés barrières (PET, EVOH, PVDC, SiOx, AlOx, aluminium,...) Ces feuilles laminées présentent l'avantage de pouvoir être imprimées à plat avant de confectionner l'emballage et surtout d'obtenir des parois flexibles d'épaisseur très fine entre 100 et 400 microns et très régulières (avec des variations d'épaisseur inférieures à 10 microns). La finesse et la consistance de l'épaisseur de la paroi flexible permettent d'obtenir un emballage ayant un faible coût en matière tout en assurant ses performances.

## Revendications

1. Procédé de fabrication d'un emballage plastique pour produits liquides ou visqueux comprenant trois éléments distincts, à savoir
une paroi latérale cylindrique flexible (1) formée à partir d'une feuille enroulée autour d'un mandrin,
un fond (2) au moins partiellement rigide et
une partie supérieure (3) au moins partiellement rigide qui comprend un goulot (4)
le procédé étant **caractérisé par** les étapes suivantes:
fixer la paroi latérale à la partie supérieure en disposant à l'intérieur du cylindre formé par la paroi latérale un premier mandrin (5) sur lequel la paroi latérale et la partie supérieure prennent appui, obtenant ainsi une application d'une force régulière et constante qui appuie la partie supérieur contre la paroi latérale;
souder la paroi latérale à la partie supérieure;
fixer la paroi latérale au fond en disposant à l'intérieur du cylindre formé par la paroi latérale un deuxième mandrin (6) sur lequel une partie centrale du fond prend appui, obtenant ainsi un positionnement du fond par rapport à la paroi latérale; et
souder la paroi latérale au fond.

2. Le procédé selon la revendication 1 comprenant en outre l'étape d' introduire le deuxième mandrin dans l'intérieur du cylindre formé par la paroi latérale, en passant le deuxième mandrin dans le goulot de la partie supérieure.

## Patentansprüche

1. Verfahren zum Herstellen einer Kunststoffverpackung für flüssige oder zähflüssige Produkte, die drei getrennte Elemente aufweist, nämlich:
eine biegsame zylindrische Seitenwand (1), die ausgehend von einem Blatt, das um einen Dorn gewickelt wird, ausgebildet ist,
einen Boden (2), der wenigstens teilweise starr ist und
einen oberen Teil (3), der wenigstens teilweise starr ist und einen Hals (4) aufweist,
wobei das Verfahren durch die folgenden Schritte gekennzeichnet ist:
Befestigen der Seitenwand an dem oberen Teil, indem in dem Inneren des von der Seitenwand gebildeten Zylinders ein erster Dorn (5) angeordnet wird, auf den sich die Seitenwand und der obere Teil stützen, so dass eine Anlegung einer regelmäßigen und konstanten Kraft erzielt wird, die den oberen Teil gegen die Seitenwand drückt,
Schweißen der Seitenwand an den oberen Teil,
Befestigen der Seitenwand an dem Boden, indem in dem Inneren des von der Seitenwand gebildeten Zylinders ein zweiter Dorn (6) angeordnet wird, auf den sich ein zentraler Teil des Bodens stützt, so dass eine Positionierung des Bodens in Bezug zu der Seitenwand erzielt wird, und
Schweißen der Seitenwand an den Boden.

2. Verfahren nach Anspruch 1, das ferner den Schritt des Einführens des zweiten Dorns in das Innere des von der Seitenwand geformten Zylinders aufweist, indem der zweite Dorn durch den Hals des oberen Teils durchgeführt wird.

## Claims

1. Method for manufacturing a plastics package for liquid or viscous products, comprising three separate elements, namely
a flexible cylindrical side wall (1) formed from a film wound around a former,
an at least partially rigid base (2), and
an at least partially rigid upper part (3) which comprises a neck (4),
the method being **characterized by** the following steps of:
fixing the side wall to the upper part by disposing, inside the cylinder formed by the side wall, a first former (5) against which the side wall and the upper wall bear, thereby applying a regular and constant force which presses the upper part against the side wall;
welding the side wall to the upper part;
fixing the side wall to the base by disposing, inside the cylinder formed by the side wall, a second former (6) against which a central part of the base bears, thereby positioning the base with respect to the side wall; and
welding the side wall to the base.

2. Method according to Claim 1, further comprising the step of
introducing the second former into the interior of the cylinder formed by the side wall by passing the second former into the neck of the upper part.
